# EUROPEAN PATENT APPLICATION

(11) **EP 3 579 585 A1**
(43) Date of publication of application: **11.12.2019**
(21) Application number: 17895378.2
(22) Date of filing: 06.02.2017
(51) Int. Cl.: H04W 4/00, H04B 5/04

(54) **CALLING SYSTEM USING SHORT-RANGE WIRELESS COMMUNICATION TECHNOLOGY**

(30) Priority: 02.02.2017 KR 20170015186
(71) Applicant: Hello Factory Co., Ltd., Seoul 06314 (KR)
(72) Inventor: KIM, Kyung Min, Seoul 05268 (KR); KIM, Hyun Jip, Seoul 06800 (KR)
(74) Representative: ABG Intellectual Property Law, S.L.
(86) International application number: PCT/KR2017/001257
(87) International publication number: WO 2018/143498

(57) **Abstract**

The present invention relates to a paging system using a near field wireless communication method. More particularly, the present invention relates to a beacon paging system capable of transferring to a service provider a request corresponding to a signal by using a Bluetooth low energy (BLE) beacon device enabling a user to press the same, and accurately and rapidly identifying and providing, by the service provider who has received the request, a corresponding request and storing the same as a record.

## Description

### Technical Field

The present invention relates to a paging system using a near field wireless communication method. More particularly, the present invention relates to a beacon paging system capable of transferring to a service provider a request corresponding to a signal by using a Bluetooth low energy (BLE) beacon device enabling a user to press the same, and accurately and rapidly identifying and providing, by the service provider who has received the request, a corresponding request and storing the same as a record.

### Background Art

Through the industrial revolution and the information revolution, society is undergoing a hyper-connectivity revolution based on the Internet of Things (IoT), where everything is connected to the Internet. Currently, things connected to the Internet are less than 1% of all objects, but various innovations and business opportunities can be created in the future using IoT technology.

As an example of ubiquitous IoT services, an Internet-connected car may support a service of automatically transmitting an emergency message and an autonomous driving service. In addition, healthcare products that may measure a heart rate, an amount of exercise, etc. may support healthcare services. Smart home services may include remote control of home appliances or closed circuit television (CCTV) monitoring service.

IoT technologies include sensing technologies, wired and wireless communication and network infrastructure technologies, and IoT service interfacing technologies. Such sensing technologies include remote sensing by use of traditional sensors such as a temperature sensor, a humidity sensor, a thermal sensor, a gas sensor, an illumination sensor, and an ultrasonic sensor; physical sensors that may acquire information from a physical object or surroundings such as a synthetic aperture radar (SAR), radar, a position sensor, a motion sensor, and an image sensor. Physical sensors are advancing to smart sensors that have standard interfaces and information processing capabilities to enhance application properties. Also, the physical sensors may have a virtual sensing function of extracting certain information from sensed data, and the virtual sensing function may be implemented in IoT service interfaces. IoT sensing technologies employ a multiple sensor technology that is more advanced than conventional independent sensors, and allow extraction of more intelligent and high-dimensional information.

The wired or wireless communication and network infrastructure technologies of the IoT may include all communication services, apparatuses, and network infrastructure that are used for networking humans, devices, and services regardless of communication protocols and physical layers such as wireless personal area networks (WPAN), Wi-Fi, 3G/4G/LTE, Bluetooth, Ethernet, broadband convergence network (BcN), satellite communication, microware, serial communication, and power line communication.

The IoT service interface enables interfacing of IoT entities such as humans, devices, and services with application services each of which provide a specific function. The IoT service interface is not a simple network interface, but is a comprehensive term that provides or facilitates a variety of interfacing operations, for providing services, including: sensing, manipulation, extraction, processing, and storing of information; determination; situation awareness; recognition; security and privacy protection; authentication and authorization; discovery; object formalization; ontology-based semantics, open sensor-API, virtualization, positioning, processor management, open platforms, middleware; data mining; Web Services; and social network services.

Particularly, a wireless paging button, generally used in restaurants, hospitals, and factories, functions to page someone for transferring whether or not a specific event has occurred or for transferring user requirements, or to transmit information. When a user presses the wireless paging button to input a paging signal, the paging signal is transmitted to a central control device so that the central control device identifies the wireless paging button, and thus the central control device provides an environment to follow up on the corresponding wireless paging button.

Recently, device to device (D2D) communication may be performed by using a Bluetooth technology that is mainly used as a near field network technology, by using the same, uni-directional as well as bi-directional data whereby transmission and reception is available.

Bluetooth technology replaces multiple cable connections which are required between devices with a single wireless connection within a local area. For example, when Bluetooth wireless technology is implemented in a mobile phone and a laptop computer, the mobile phone and the laptop computer may be used without being connected to a cable. All types of digital devices including printers, personal digital assistants (PDAs), desktop computers, fax machines, keyboards, and joysticks may be a part of a Bluetooth system. The Bluetooth wireless technology allows devices to be free from cables, and acts as a universal bridge for forming an interface between an existing data network and peripheral devices, and a particular group between devices spaced apart from a fixed network lower structure. Bluetooth has been designed to be operated even in a radio frequency environment with much noise, and therefore Bluetooth ensures connection using rapid recognition and a frequency hopping method. A Bluetooth module performs new frequency hopping after receiving or sending a packet, thereby avoiding interference with other signals. Compared to other systems which are operated in the same frequency, Bluetooth uses particularly fast and short packets. Meanwhile, with the announcement of Bluetooth 4.0 with features including classic Bluetooth, Bluetooth high speed and Bluetooth low energy, interest in Bluetooth low energy technology is increasing.

In ultra near field communication technology, near field communication (NFC) is well known. When such a NFC and RFID technology is used, beacon or iBeacon technology uses a Bluetooth bandwidth of 2.4GHz.

Such a beacon may provide information customized according to movement of a user since the beacon can accurately identify the position of the user at a short distance. Accordingly, there are many applications in the marketing field.

The beacon technologies use a low power device using Bluetooth low energy (BLE) that is Bluetooth version 4.0. This technology is also attracting attention.

In a conventional Bluetooth version, there are limitations on power efficiency and a number of devices that can be connected at the same time. In Bluetooth version 4.0, power consumption has been remarkably improved so that use for one year or more is available with a single coin-shaped battery, and there is no limit on a number of devices that are connected at the same time. Accordingly, a beacon service becomes more widely available.

As a feature of a beacon, recognition in a range from several tens of cm to 100m is available according to output power, and the position of an individual can be accurately identified even in an indoor space with many people in a limited space. Accordingly, information consistent with an individual may be transmitted since each device provides different types of information. The present invention relates to a paging system, wherein the system is configured with a paging button outputting a signal of a conventional predefined specific RF (AM, FM) frequency, and a display device receiving the signal and outputting the same on a screen, being capable of connecting each receiving device by using an IoT technology to further evolve and eliminate limitation on an approaching distance, transferring a paging number as well as requirements, checking a response time and storing the paging object and the same as data.

In addition, in order to expand a function of a conventional paging system and for efficient transmission, in a paging button disclosed in the present invention, a beacon may selectively transfer a signal including information of various requirements of a user who presses the paging button. In addition, in a receiver, it is possible to provide a fast response by identifying the intention immediately rather than simply recognizing whether or not a request signal is input. Herein, a smart watch worn by the receiver, a smartphone, or a special purpose terminal may receive the above request signal so that an efficient service without omission may be available during busy work processing.

In addition, for the manager who manages the entire service and indicates service processing for a user who has input a paging request, conventionally, there is no way to check whether or not a response service is actually provided to a customer. However, in the present invention, the receiver directly moves on a position where a user who has input a paging request and interacts with the user, and thus whether or not an actual response service is provided and an elapsed time for the same may be managed as data. Accordingly, the entire service quality may be improved.

Accordingly, in the present invention, a method and paging system is provided, the method and system being capable of efficiently providing a response service when a paging button transmitting a beacon signal receives a paging signal input.

### Disclosure

### Technical Problem

Accordingly, the present invention has been made keeping in mind the above problems occurring in the prior art, and an object of the present invention is to provide an environment where communication between a person who inputs a paging request and a person who becomes a paging receiver is rapidly and accurately performed by using a BLE beacon signal

It will be appreciated by persons skilled in the art that the objects that could be achieved with the present invention are not limited to what has been described hereinabove and the above and other objects that the present invention could achieve will be more clearly understood from the following detailed description.

### Technical Solution

According to an embodiment of the present invention, a paging system includes: at least one paging button positioned at a specific space by being matched thereon; an access point (AP) receiving a Bluetooth low energy (BLE) signal transmitted from the at least one paging button; an operational server receiving a paging signal from the AP, and identifying a paging button that has transmitted a paging request based on the paging signal transmitted from the least one paging button; and at least one smart watch displaying paging information based on the paging signal transmitted from the operational server, wherein when the smart watch receives an acceptance input signal for the paging signal transmitted from the operational server, the smart watch transmits a matching signal to the operational server, the operational server is set to transmit a matching confirmation signal to the at least one smart watch in response to the received matching signal, and the operational server receives tagging information between the smart watch having transmitted the matching signal and the paging button having transmitted the paging request, thus completes the paging request.

Preferably, the at least one paging button may transmit a BLE signal to the AP when paging request information is input to the paging button, and transmit a BLE signal to the AP based on a preset transmission period regardless of the paging request information that is input to the paging button.

Preferably, the BLE signal transmitted when the paging button receives the paging request signal and the BLE signal transmitted regardless of the reception of the paging request information may be different, and the BLE signal transmitted when the paging request information is received may further include information indicating a paging request.

In addition, when the operational server receives a plurality of matching signals from the at least one smart watch, the operational server may match the paging button with one smart watch.

Preferably, the operational server may match the paging button with a smart watch corresponding to a matching signal received first among matching signals received for a predetermined time after the at least one smart watch has transmitted the paging signal.

Preferably, the tagging information may be information generated after the smart watch is physically in contact with the paging button.

Preferably, the tagging information may be information generated when the smart watch approaches the paging button within a preset distance range.

According to another embodiment of the present invention, a paging system includes: at least one paging button positioned at a specific space by being matched thereon; an access point (AP) receiving a Bluetooth low energy (BLE) signal transmitted from the at least one paging button; an operational server receiving a paging signal from the AP, and identifying a paging button that has transmitted a paging request based on the paging signal transmitted from the at least one paging button; at least one smart watch displaying paging information based on the paging signal transmitted from the operational server; and at least one smartphone receiving web order information from the operational server when the paging button transmits a BLE signal including information indicating a paging request, wherein when the smart watch receives an acceptance input signal for the paging signal transmitted from the operational server, the smart watch transmits a matching signal to the operational server, the operational server is set to transmit a matching confirmation signal to the at least one smart watch in response to the received matching signal, and the operational server receives tagging information between the smart watch having transmitted the matching signal and the paging button having transmitted the paging request, thus completes the paging request.

Preferably, the operational server may be set to perform matching between the paging button having transmitted a paging request signal and the smartphone receiving the web order information.

Preferably, the operational server may determine that matching between the paging button and the smartphone has been performed when the smartphone receives a BLE signal transmitted from the paging button, and the smartphone transmits order information to the operational server.

The smartphone may be a smartphone of a user who inputs a paging request signal to the paging button.

In addition, the smartphone may be a smartphone belonging to a provider of the paging system.

### Advantageous Effects

According to an embodiment of a paging system of the present invention, whether or not an actual response is provided to a customer can be checked after transmitting a paging signal.

In addition, according to the present invention, after transmitting a paging signal, a paging request or requirements of a customer are transferred to a plurality of servers at the same time so that a fast response can be provided to the customer. In addition, whether or not an actual response is provided and data used for determining an elapsed time for the same can be also provided by a receiver who has accepted the paging signal as the receiver directly moves on a position where the person who has input the paging request is present. Accordingly, the entire service quality can be improved.

### Description of Drawings

FIG. 1 is a view showing an example embodiment of a beacon paging button according to present invention.
FIG. 2 is a view showing an example embodiment of a beacon AP according to present invention.
FIG. 3 is a view showing a conceptual diagram of an embodiment of a paging system according to the present invention.
FIG. 4 is a view showing an embodiment of a process of paging and responding for the same according to the present invention.
FIG. 5 is a view showing an embodiment of ordering a food according to the present invention.
FIG. 6 is a view showing an embodiment of an operation flow of each device when a paging request is input according to the present invention.
FIG. 7 is a view showing another embodiment of an operational flow of each device according to the present invention.
FIG. 8 is a view showing another embodiment of a paging system according to the present invention.

### Mode for Invention

Since the present invention may be modified in various forms, and may have various embodiments, the following exemplary embodiments are illustrated in the accompanying drawings, and are described in detail with reference to the drawings.

However, this is not intended to limit the present invention to specific embodiments, and the present invention should be construed to encompass various changes, equivalents, and substitutions within the technical scope and spirit of the invention. Like numbers refer to like elements throughout in the description of each drawing.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present.

The terminology used herein is for the purpose of describing particular embodiments only and is not intended to be limiting of the invention. As used herein, the singular forms are intended to include the plural forms as well, unless the context clearly indicates otherwise. It will be further understood that the terms "comprises" "comprising", "includes", and/or "including", when used herein, specify the presence of stated features, integers, steps, operations, elements, and/or components, but do not preclude the presence or addition of one or more other features, integers, steps, operations, elements, components, and/or groups thereof

In addition, in the present description, a device may be a general device (or object) applied to the IoT by being connected to a gateway. For example, devices may include a wireless pager, a smartphone, a tablet PC, a computer, a temperature sensor, a humidity sensor, an acoustic sensor, a motion sensor, a proximity sensor, a gas detection sensor, a heat detection sensor, a refrigerator, a CCTV, a TV, a washing machine, a dehumidifier, a lighting device, a fire alarm, etc. However, it is not limited thereto.

In addition, in the present description, a device may be interchangeably used with "terminal" or "apparatus". In addition, "device", "apparatus", and "terminal" may be described in the same expression.

In addition, in the present description, device information of a device is information representing characteristic of the device. For example, the information may include an identification value of the device, a device type, types and characteristics of data sensed by the device, and a sensing period of the device.

In addition, in the present description, services may include various services that may be provided by the device. Services may include services based on communication with a server or another device, and services operable within a device. Preferably, services applied in the present disclosure are broadly understood to include various services that can be performed in a device in addition to services described by way of example in the present disclosure.

Hereinafter, preferred embodiments of the present invention will be described in detail with reference to the accompanying drawings. Throughout the drawings, the same reference numerals will refer to the same or like parts and description of the same configuration element will be omitted.

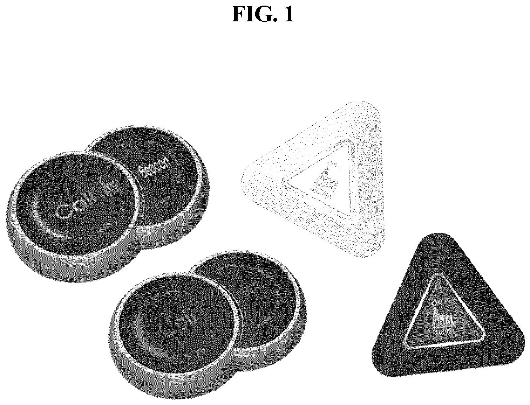

FIG. 1 is a view showing an embodiment of a beacon paging button according to the present invention.

When an input signal is input to a button unit of a beacon paging button according to the present invention, a predetermined beacon signal may be transmitted as a Bluetooth power (BLE) beacon signal. The BLE beacon signal transmitted by the beacon paging button may be received by a beacon access point (AP), and the beacon AP may receive a BLE beacon signal from at least one beacon paging button.

The beacon paging button may include a display unit, a button unit, a communication unit, and a control unit.

In the display unit of the beacon paging button, information indicating to a user who wants to page someone that a button (or touch) input is available may be displayed. The display unit may output information by using light emitting element such as liquid crystal, LCD, LED, TFT, etc, if necessary, may output a printed image.

The button unit having a physical form may receive a physical input from a user, and transform the input in to an electronic signal. Alternatively, the button unit may include a touch screen, and receive a user input by receiving a touch input on the touch screen.

The communication unit may transmit a signal of the beacon paging button, and receive signals from another device. The communication unit may transmit BLE beacon signals, and transmit and receive signals by using a wireless communication method such as cellular communication, Wi-Fi, NFC, Zigbee, etc.

The communication unit may use uni-casting, multi-casting, and broadcasting methods as a method of transmitting beacon signals. The uni-casting transmission method is one-to-one method, and the beacon paging button may respectively perform uni-casting of a beacon signal for another device. The multi-casting transmission method is a method of transmitting the same beacon signal to a plurality of receivers at one time, and the broadcasting transmission method is a method of indiscriminately transmitting a signal to a plurality of other devices. The beacon paging button may transmit a beacon signal by using the broadcasting transmission method for advertisement so that other devices may find the beacon paging button.

The control unit may control signals input/output from/to the display unit, the button unit, and the communication unit of the beacon paging button, and process data so that the beacon paging button operates as one device.

The beacon paging button may further include a fixing unit so that the beacon paging button is fixed at a specific position. Generally, the beacon paging button may be used in general restaurants and hospitals, factories, etc., and fixed at a table of the restaurant and a bed of the hospital. When a user requires, the fixing unit may be detached so that the beacon paging button becomes portable.

In the present description, the beacon paging button may perform general functions as a mobile terminal. Accordingly, the beacon paging button may be a paging button, as well as, a smartphone, a table PC, a smart watch, a PC, a smart glass, a smart ring, a smart TV, a personal digital assistant (PDA), a laptop, a media player, a micro server, a global positioning system (GPS) device, an electronic book device, a digital broadcasting device, a navigation, a kiosk, an MP3 player, a digital camera, and other mobile or non-mobile computing device, but it is not limited thereto.

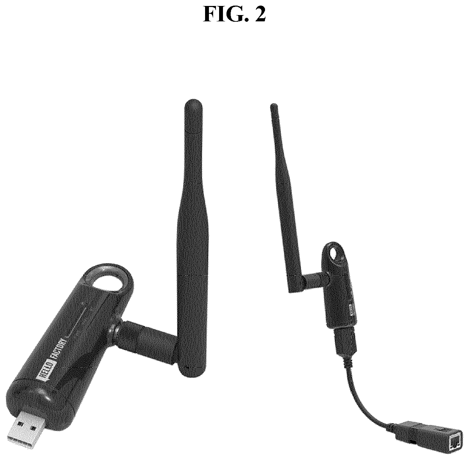

FIG. 2 is a view showing an example embodiment of a beacon AP according to the present invention.

As shown in FIG. 2, a beacon AP may receive a signal transmitted from a beacon paging button. The beacon AP may perform scanning for BLE signals, receive a BLE signal, and identify a transmission subject from the received BLE signal.

The beacon AP may transmit the received BLE signal to an operation sever. In other words, the beacon AP may receive and transmit signals. The beacon AP may be positioned within a range at which being capable of performing wireless communication with the beacon paging button. As a near field wireless communication method, the beacon AP may be installed for each radius that may be recognized as the same space.

Communication radius of the beacon AP may overlap with radius of another beacon AP. For example, a beacon paging button positioned at a specific space may perform wireless communication with a plurality of beacon APs. Herein, the beacon AP may identify which beacon paging button has transmitted a BLE signal. In addition, a beacon AP that is identified the beacon paging button first or a beacon AP having the largest BLE signal receiving intensity may continuously perform wireless communication with the corresponding beacon paging button.

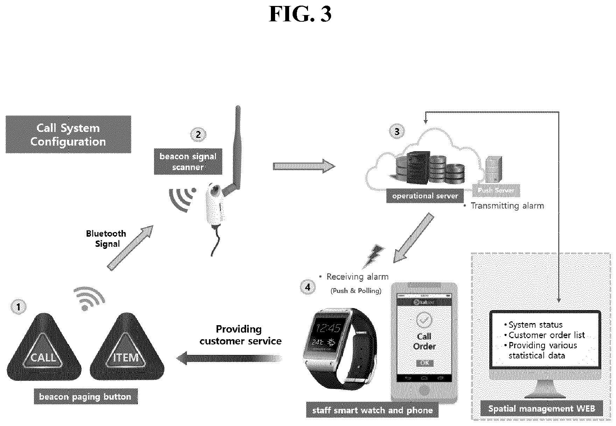

FIG. 3 is a view showing a conceptual diagram of an embodiment of a paging system according to the present invention.

In the present description, a user may be a user who wants page other people. A user may be a customer of a restaurant, a patient of a hospital, or an employee of a factory. In the present description, for the convenience of description, description is made by using a restaurant as an example.

A paging system of the present invention may include a beacon paging button, a beacon AP, an operational server, a staff device, and a spatial management WEB server.

The beacon paging button may receive a button input from a user who wants to be provided with a service, and transmit a BLE signal in association with the button input to the beacon AP. In addition, the beacon paging button may transmit a BLE signal to the beacon AP periodically or at a specific time slot even though a button input of a user is not input.

For example, the beacon paging button may transmit a BLE signal corresponding to a paging command when a customer pages a staff of a restaurant, and transmit a BLE signal corresponding to an order of a menu when a customer selects a specific food of the restaurant (for example, a bottle of beer). The beacon paging button may broadcast around a BLE signal periodically or non-periodically regardless of a paging command.

The beacon AP may receive a BLE signal transmitted from the beacon paging button, and transmit a signal corresponding to the BLE signal to the operational server connected to the beacon AP in a wired/wireless manner.

The beacon AP may periodically or non-periodically receive a BLE signal transmitted from the beacon paging button, and when it is determined that a specific code is included in the BLE signal, the beacon AP may determine that a paging request is present. When it is determined that a paging request is present, a signal corresponding to the corresponding BLE signal may be transmitted to the operational server.

The beacon AP may specify a beacon paging button that has transmitted a BLE signal. In a specific frame of a BLE signal received by the beacon AP, identification information of the beacon paging button may be included.

The operational server may control transmitting and receiving of signals between the beacon paging button and the beacon AP. The beacon AP may identify which beacon paging button has transmitted a BLE signal based on a received BLE signal. As described before, the beacon AP may identify the beacon paging button, or even if the beacon AP identifies the beacon paging button, the operational server may identify the beacon paging button. The beacon paging button may transmit unique identification information with a BLE signal, and transmit the corresponding information by including the same in a specific frame within the BLE signal.

The operational server may pre-store identification information of a beacon paging button, and specify which beacon paging button has transmitted a BLE signal by comparing identification information of the stored beacon paging button with a received BLE signal.

The operational server may transmit a paging signal to the staff device. The staff device may mean a device of a staff who becomes a paging receiver. For example, the staff device may be a device such as smartphone or smart watch of a server in a restaurant.

The staff device may receive a paging signal from the operational server. In the staff device, based on a received paging signal, information of which beacon paging button has transmitted the paging signal may be displayed. The staff may move to a position where a user who has input the paging request is present and provide a response service based on the information displayed on the staff device.

The spatial management WEB server may check whether or not a response service has been provided from the staff to the user who has input the paging request, and manage requirements of the user. In addition, the spatial management WEB server may store and manage information of a number of transmission times of signals of the beacon paging button, a transmission interval, etc. within a corresponding space as statistical values. In addition, the spatial management WEB server may store and analyze user requirement data and use the same as a marketing tool or efficient operation.

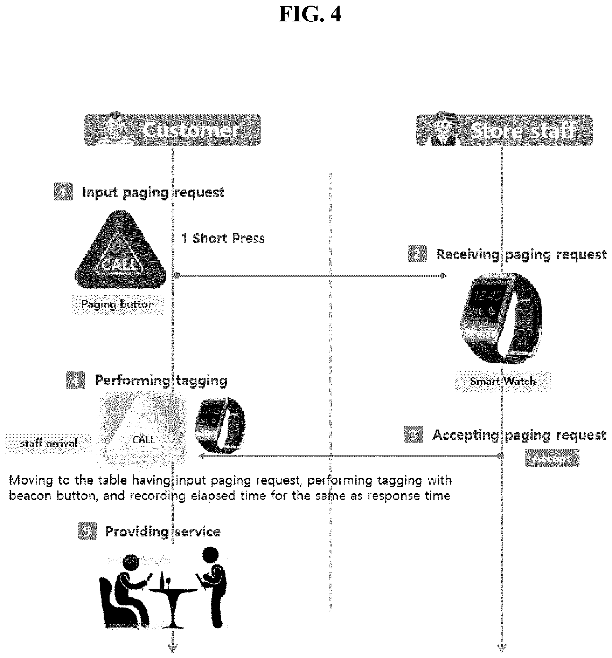

FIG. 4 is a view showing an embodiment of a process of paging and responding for the same according to the present invention.

As shown in FIG. 4, description may be made based on operations between a customer who wants to page someone and a restaurant staff who becomes a paging subject.

First, in first step, a customer may input a paging request to be provided with a service. For example, the service may mean a wide concept including a charged service such as ordering a food, or a free service such as requesting battery charging.

The customer may press one time shortly a request beacon button, and the request beacon button may broadcast a BLE signal corresponding thereto since the request beacon button has received a command input corresponding to the paging request from the customer.

The request beacon button may transmit a specific signal when the request beacon button receives a command input corresponding to a paging request from the customer. The specific signal may be a signal including additional information rather than a single paging signal such as iBeacon signal or Eddystone-URL signal. Recently, as a method used in Google Chrome browser, a method of providing physical web whereby a preset web page is displayed when a specific BLE signal is received may be included. Accordingly, by using the request beacon button, displaying a Chrome browser web page on a smartphone is available.

In second step, the beacon AP may receive a BLE signal broadcasted from the request beacon button, and the beacon AP may transfer the same to the operational server. The operational server may transmit a paging request signal to at least one preset smart watch that is a device for staff.

In third step, in the smart watch worn by the staff of the restaurant, information of which beacon button has transmitted the paging request may be displayed. In addition, a staff of the restaurant who is capable of providing the response service may input an acceptance input to his or her smart watch so that a paging receiver may be specified.

In the above step, the operational server may store matching information between the corresponding customer and the restaurant staff, and may transmit a paging request signal to the smart watch of the same restaurant staff when a paging request signal is received afterwards. However, the operational server may transmit a paging request signal to a smart watch of other restaurant staff when the operational server determines that a corresponding service of the restaurant staff may be provided with a predetermined delay time or longer. This may be available by performing one: one matching between a customer and a restaurant, such that the customer may be provided with a high-quality of service.

In fourth step, the restaurant staff who has accepted to provide the response service may move to a position of the customer who has input the paging request, and by performing tagging between the beacon paging button of the table where the customer is present and the smart watch of the restaurant staff, it may be shown that the restaurant staff is responding to a customer request.

Tagging in the present invention may be tagging including a proximity sensing touch in addition to an actual physical touch. For example, when the smart watch of the restaurant staff approaches the beacon paging button of the table within 10cm, it is determined that tagging is performed by using a proximity sensor.

The operational server or the spatial management WEB server may count a series of times from when a customer inputs a paging request to when a restaurant staff accepts the paging request, and to when tagging is performed as the restaurant staff moves on the corresponding position. The operational server may accumulate and manage the counted times and use the same as statistical information for a response service.

In fifth step, the customer may interact with the restaurant staff (face to face), and request a desired service. The restaurant staff may provide a service corresponding to the same. For example, ordering food or payment request may proceed.

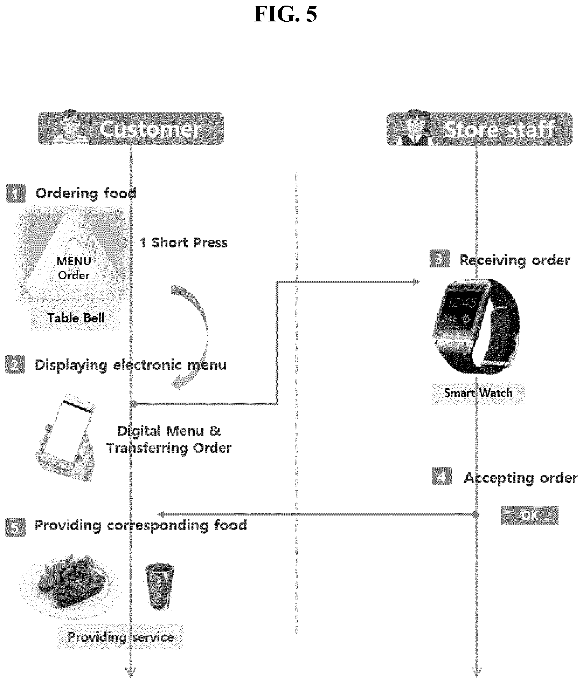

FIG. 5 is a view showing an embodiment of ordering food according to the present invention.

As described in FIG. 4 above, description may be made based on operations between a customer who wants to input a paging request and a restaurant staff who becomes a paging receiver.

First, in first step, a customer may input a paging request to be provided with a service. For example, the service may be requesting the menu for food, etc.

The customer may shortly press a table beacon button one time, and the table beacon button may transmit a BLE signal as the table beacon button has received a command input corresponding to the paging request from the customer.

The beacon AP may receive the BLE signal transmitted from the table beacon button, and a path for accessing a web page through which a web order of the restaurant is available by using the corresponding table beacon button may be transmitted via the operational server.

A device provided on the table on which an electronic menu enabling a customer to make a web order is displayed may be a device such as table PC, smartphone, etc., and may include unique identification information. In the device for making the web order that is connected to the table beacon button in a wired and wireless manner, an electronic menu may be displayed, and thus the customer may input an order service from the menu.

According to the present description, an electronic menu enabling the customer to input a web order may be displayed on a device of the customer such as smartphone. When information of the smartphone of the customer is registered in the operational server in advance, as the customer presses the table beacon button, the electronic menu may be displayed on the smartphone of the customer.

A case where information of a smartphone of customer is registered in the operational server in advance may include various cases. First, the advance registration may be performed by directly performing wireless communication between the smartphone of the customer and the table beacon button. For example, the beacon AP and as well as the smartphone of the customer may receive a BLE signal broadcasted from the table beacon button, and the customer may authenticate the corresponding table beacon button by using his or her smartphone. After establishing a session between the table beacon button and the smartphone of the customer, the customer may proceed with the following process by pressing the table beacon button.

Second, the advance registration may be performed by inputting identification information of the corresponding table beacon button through the smartphone of the customer. For example, a unique identification number of the table beacon button (for example, ID number) may be registered on the web, or the table beacon button may be registered in the smartphone of the customer by capturing and inputting a QR code, or by performing NFC tagging.

When the identification information of the table beacon button has been registered in the smartphone of the customer, the operational server may provide a service on the assumption that customer is present at the corresponding table.

Third, the advance registration may be performed as the smartphone performs communication within a specific space, and thus the operational server may automatically perform relation matching between the corresponding table beacon button and the smartphone. For example, the smartphone may receive a signal transmitted from the corresponding restaurant by a wireless communication method of WiFi or Bluetooth installed in a specific space of the restaurant, and the table beacon button may transmit a BLE signal differing among table beacon buttons. The smartphone may perform the following operation by matching the signal of the restaurant with the BLE signal (if necessary, matching between devices having the strong signal receiving intensity).

The beacon AP may receive the BLE signal broadcasted from the table beacon button, and the beacon AP may transmit the same to the operational server. The operational server may transmit a paging request signal to at least one preset smart watch that is a device for staff.

In second step, the customer may input an order based on information displayed in the electronic menu. In the present step, preferably, the order may mean ordering a food that may be selected from the electronic menu. The ordering may be proceeded by using an input such as text or voice in addition to providing selectable menu on the electronic menu.

The customer may be also provided with various types of information related to the electronic menu rather than being simply provided with food items selectable from the electronic menu. The device on which the electronic menu is displayed may provide device-related information (which may be table PC of the table or a smartphone of the customer). For example, when a food is ordered, nutrition information such as calories, menu information recommended therewith, previously ordered information, payment information, etc. may be displayed.

In third step, the operational server may specify the order based on received BLE information and order information. For example, the operational server may specify that a steak combo meal set is ordered in the table number 3.

The operational server may transmit the corresponding order information to a device such as smart watch of the restaurant staff, and the smart watch of the restaurant staff may receive corresponding order information. In the smart watch worn by the restaurant staff, information of which table beacon button has transmitted the paging request may be displayed.

In fourth step, a restaurant staff who is capable of providing a response server for the order information inputs acceptance information to the smart watch so that he or she becomes a paging receiver.

During the above step, the operational server may store matching information between the corresponding customer and the restaurant staff, and transmit a paging request signal to the smart watch of the same restaurant signal when a paging request signal is received afterwards. However, the operational server may transmit the paging request signal to a smart watch of other restaurant staff when the operational server determines that a corresponding service of the restaurant staff may be provided with a predetermined delay time or longer. This may be available by performing one: one matching between a customer and a restaurant, such that the customer may be provided with high-quality service.

In fifth step, the restaurant staff who has accepted to provide the response service may bring the food to the position of the customer who has input the paging request. By performing tagging between the paging button of the table where the customer is present and the smart watch of the restaurant staff, it may be shown that the restaurant staff is actually providing the response service according to the customer request.

The operational server or the spatial management WEB server may count a series of times from when the customer inputs the paging request to when the restaurant staff accepts the paging request, and to when tagging is performed as the restaurant staff moves to the corresponding position. The operational server may accumulate and mange the counted times and use the same as statistical information of a response service.

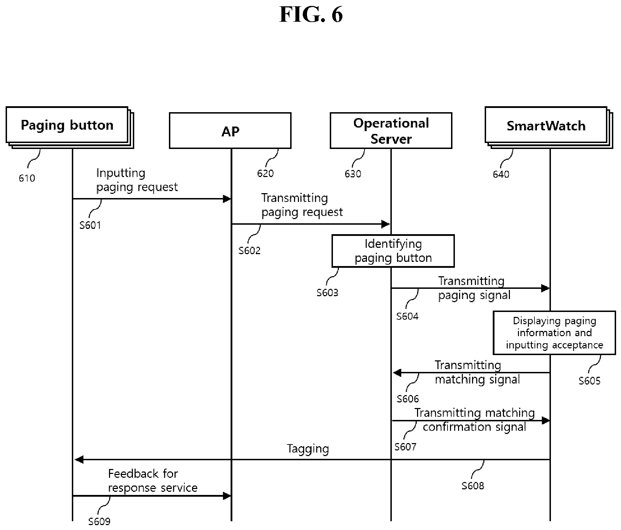

FIG. 6 is a view showing an embodiment of an operation flow of each device when a paging request is input according to the present invention.

First, in step S601, a paging button 610 may include an input part, and receive a paging command signal from a user who wants to input a paging request within a restaurant. The paging button 610 may transmit a BLE beacon signal to an AP 620 when a paging command signal is received.

In step S602, the AP 620 may receive a BLE beacon signal from at least one paging button 610. Wireless communication such as Bluetooth, WiFi, NFC, Zigbee, etc. may be performed between the paging button 610 and the AP 620.

The AP 620 may transmit the received paging signal to an operational server 630. For the operational server 630 of the present invention, an apparatus being capable of easily supporting transmission and reception of information between the paging button, a beacon, and a smart watch 640 of a restaurant staff is sufficient.

In step S603, the operational server 630 may specify which paging button has transmitted a paging request based on the paging signal received from the AP 620. In a BLE beacon signal transmitted from the paging button 610, information capable of identifying the paging button 610 may be included.

In step S604, the operational server 630, after specifying which paging button has transmitted the paging request, may transmit the paging signal to at least one smart watch 640 connected to the operational server 630. For example, in an operational server of a specific restaurant, a paging signal may be transmitted to a smart watch of at least one restaurant staff (server).

In step S605, each smart watch 640 may receive the paging signal from the operational server 630, and in a display unit of the smart watch 640, corresponding paging information may be displayed. For example, information that a paging request is from the table 3 of the restaurant may be displayed.

One of restaurant serving staff who wears a smart watch 640 may express that he or she will serve for the corresponding paging request by inputting acceptance information to the smart watch.

In step S606, the smart watch 640 may transmit a matching signal indicating that the restaurant serving staff wearing the smart watch 640 will serve the paging request to the operational server 630.

In step S607, the operational server 630 may transmit to the smart watch 640 a matching confirmation signal indicating which smart watch is matched with the paging request. The restaurant serving staff who wears the smart watch 640 may confirm that matching is completed by checking matching confirmation information.

When the operational server 630 receives acceptance information from a plurality of smart watches 640, the operational server may determine to whom of restaurant staff to match the paging request by using various conditions.

For example, matching may be performed to a smart watch that has transmitted first a matching signal to the operational server 630. Herein, the operational server 630 may transmit to a smart watch having low priority a matching confirmation signal indicating that matching is performed with a smart watch having high priority.

As another example, even though a matching signal is transmitted from a smart watch having low priority, the operational server 630 may perform matching with the corresponding smart watch when the corresponding smart watch is determined to be an idle state. Herein, the operational server 630 may transmit a matching confirmation signal indicating that matching is performed with a specific smart watch to other smart watches.

In step S608, tagging may be performed between the smart watch 640 and the paging button 610. In other words, a restaurant staff wearing the smart watch 640 may move to a position of the paging button 610 and perform tagging with the paging button 610 so as to notify that he or she has moved to the corresponding position. For performing tagging, a physical contact may not be essentially required, and tagging may be performed by checking that the smart watch 640 is approaching within a certain distance range by using a proximity sensor.

In step S609, the customer who has pressed the paging button 610 and the restaurant staff wearing the smart watch 640 may interact so that a customer request may be serviced. For example, the restaurant staff may provide a response service for a food order or a special request of the customer.

The paging button 610 may perform feedback for the response service to the AP 620 after tagging being performed. For example, after serving by the restaurant staff is completed, the paging button 610 may continuously transmit BLE beacon signals to the AP 620, and the operational server 630 may statistically manage how much time has passed from the last response time based on the above information.

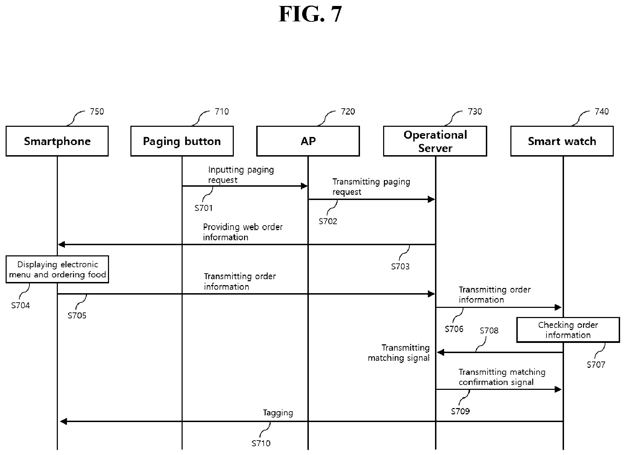

FIG. 7 is a view showing another embodiment of an operational flow of each device according to the present invention.

Describing difference with the description of FIG. 6, in FIG. 6, a process of paging a restaurant staff has been described by pressing a paging button by a customer. In FIG. 7, a process of ordering desired requirements by a customer by inputting a stall paging request before facing a restaurant staff will be described.

First, in step S701, a paging button 710 may include an input part, and receive a paging command signal from a customer (or user) who wants to page someone within a restaurant. The paging button710 may transmit a BLE beacon signal to an AP 720 when a paging command signal is received.

In step S702, the AP 720 may receive a BLE beacon signal from at least one paging button 710. Wireless communication such as Bluetooth, WiFi, NFC, Zigbee, etc. may be performed between the paging button 710 and the AP 720.

The AP 720 may transmit the received paging signal to the operational server 730. For the operational server 730 of the present invention, an apparatus capable of easily supporting transmission and reception of information between the paging button 710, the AP 720, and a smart watch 740 of a restaurant staff is sufficient.

In step S703, the operational server 730 may specify which paging button has transmitted the paging signal based on the paging signal received from the AP 720. In the BLE beacon signal transmitted from the paging button 710, information for identifying the paging button may be included.

Accordingly, the operational server 730 may provide web order information to a smartphone 750 in association with the specified paging button 710. The smartphone 750 of the present invention may be a device positioned at the table or space of the paging button and belonging to a restaurant. Herein, identification information of the paging button and identification information of the smartphone are matched and stored in the operational server in advance, thus, web order information may be provided to the smartphone immediately.

The smartphone 750 of the present invention may be a device belonging to a customer who has input a paging request rather than belonging to a restaurant. Herein, the operational server 730 may perform a process of matching identification information of the paging button with identification information of the smartphone of the customer.

A case where matching the identification information of the smartphone of is performed customer by the operational server in advance may include various cases. First, pre-registration may be performed by directly performing wireless communication between the smartphone of the customer and the paging button. For example, the AP and as well as the smartphone of the customer may receive a BLE signal broadcasted from the paging button, and the customer may authenticate the corresponding paging button by using his or her smartphone. After setting session between paging button and the smartphone of the customer, the customer may progress the following process by pressing the table beacon button.

Second, identification information of the corresponding paging button may be input through the smartphone of the customer. For example, a unique identification number of the paging button (for example, ID number) may be registered on the web, or the paging button may be registered in the smartphone of the customer by capturing and inputting a QR code, or by performing NFC tagging.

When the identification information of the paging button has been registered in the smartphone of the customer, the operational server may provide a service on the assumption that customer is present at the corresponding table.

Third, when the smartphone performs communication within a specific space, and the operational server may automatically perform relation matching between the corresponding paging button and the smartphone. For example, the smartphone may receive a signal transmitted from the corresponding restaurant by a wireless communication method of a WiFi or Bluetooth installed in a specific space of the restaurant, and the paging button may transmit a BLE signal differing among paging buttons. The smartphone may perform the following operation by matching the signal of the restaurant with the BLE signal (if necessary, matching between devices having the strong signal receiving intensity).

Fourth, reservation information may be transmitted to the operational server in advance from the smartphone of the customer, and the operational server may perform matching between the smartphone of the customer and the paging button in advance, and thus directly receive web order information from the smartphone of the customer. For example, a customer may make reservation in advance at restaurants, for example, a Table 3 next to the window at 7 p.m., and the operational server may perform association with the smartphone of the customer at 7 p.m. at Table3.

In step S704, on the smartphone 750, an electronic menu may be displayed based on web order information. The electronic menu may be web menu, if necessary, may be a menu displayed by executing in a specific application program.

A user of the user smartphone 750 may order a food based on information displayed in the electronic menu. For example, the user may input a food order of a steak combo meal displayed in the smartphone 750. In the present step, preferably, the order may mean ordering a food that may be selected from the electronic menu. The ordering may be proceeded by using an input such as text or voice in addition to providing selectable menu on the electronic menu.

In step S705, the smartphone 750 may transmit received order information to the operational server 730.

In step S706, the operational server 730 may transmit order information to at least one smart watch 740. For example, the operational server 730 of the restaurant may transmit the order information to a smart watch 740 worn by serving staff (server) of the restaurant. In detail, information indicating that a steak combo meal is ordered in the Table 3 may be transmitted.

In step S707, in the smart watch 740 having been received the order information, which customer has made the order may be displayed, and the restaurant staff wearing the smart watch 740 may check the corresponding order.

In step S708, the restaurant staff may transmit to the operational server 730 matching information indicating the he or she is responsible for the corresponding order and will provide the service.

In step S709, the operational server 730 may perform matching between the customer and the restaurant staff in association with the smart watch that has transmitted the matching information. After performing matching, matching confirmation information may be transmitted to other smart watches in addition to the matched smart watch. The matching confirmation information may be transmitted to the matched smart watch as well as to other smart watches not being matched, thus the matching information may be shared among the customer and restaurant staff. Accordingly, an environment capable of providing a customer customized service is provided.

In step S710, tagging may be performed between the smart watch 740 and the smartphone 750, and this may be used as information representing that the matched restaurant staff is serving the customer who has made the order.

After completing tagging, the paging button may continuously transmit BLE beacon signals, etc. after serving for the corresponding paging request has been completed, so that providing convenience to the customer. For example, after bringing the menu, after elapsing ten minutes, the restaurant staff may move again on the customer, and thus provide an environment of checking requirements of the customer.

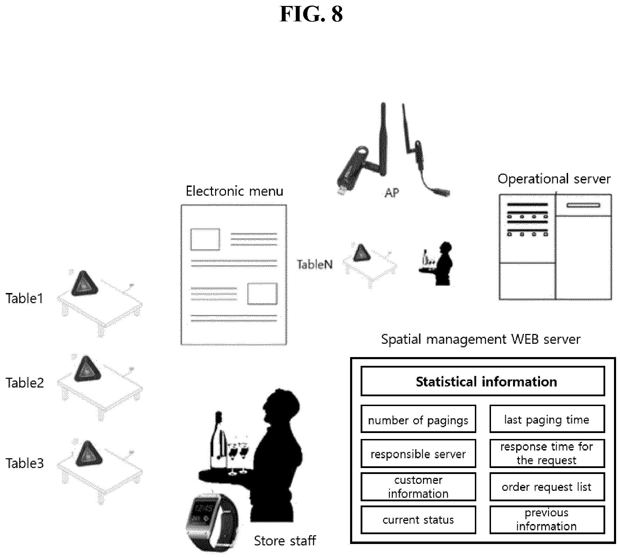

FIG. 8 is a view showing another embodiment of a paging system according to the present invention.

As shown in FIG. 8, an operational server may provide an additional service for the spatial management WEB server and a customer response service. The operational server of the present invention may be a subject that performs communication with a paging button and an AP. The spatial management WEB server may be a server managing a response service between an actual customer and a restaurant staff.

The spatial management WEB server may transmit various types of information to a customer device based on paging information of the customer. The customer device may be a device belonging to the customer or may be a device belonging to the restaurant which is positioned at a space of the customer.

The spatial management WEB server may transmit to the customer an accumulated order list of the corresponding customer when the customer is identified, thus enabling the customer to easily make an order. In the restaurant, a popular food or a food based on body information of the customer may be recommended. Alternatively, order list information made by another customer, or estimated temporal information for the food may be transmitted.

The spatial management WEB server may automatically transmit a signal for sending a restaurant staff to provide an easy order when order information is not received from the customer for a predetermined time or more. Herein, the restaurant staff may directly move on the position where the customer is present to support an easy order.

The spatial management WEB server may provide various types of content to a customer device. For example, TV videos related to the order from the menu chosen by the customer may be provided. The customer may be provided with a high-quality service based on the received content.

After completing the order, the spatial management WEB server may provide game content to a customer device. By providing associated game content to the customer device or providing benefits to game played by the customer after completing the order, game content may be provided during a time until an actual service is provided.

In the present invention, description has been made by distinguishing the paging button and the smartphone. However, when the smartphone is capable of transmitting a BLE beacon signal, the paging button and the smartphone may be a single device. For example, the paging button and the smartphone (or table PC) which are provided in the table of the restaurant may be one a single device, and perform a paging request and an order request.

The description suggests the best mode of the present invention to provide an example that explains the present invention and also enables one skilled in the art to manufacture and use the present invention. The specification drafted as such is not limited to detailed terms suggested in the specification.

Accordingly, it will be apparent to those skilled in the art that various modifications, changes, and variations may be made in the example without departing from the scope of the invention. For example, in order to achieve the effect intended by the present invention, it is to be noted that all the functional blocks shown in the attached drawing may not be needed to achieve the effect desired by the present disclosure and even that case may be included in the technical scope of the present disclosure defined by the appended claims.

## Claims

1. A paging system, the system comprising:
at least one paging button positioned at a specific space by being matched thereon;
an access point (AP) receiving a Bluetooth low energy (BLE) signal transmitted from the at least one paging button;
an operational server receiving a paging signal from the AP, and identifying a paging button that has transmitted a paging request based on the paging signal transmitted from the least one paging button; and
at least one smart watch displaying paging information based on the paging signal transmitted from the operational server, wherein
when the smart watch receives an acceptance input signal for the paging signal transmitted from the operational server, the smart watch transmits a matching signal to the operational server, the operational server is set to transmit a matching confirmation signal to the at least one smart watch in response to the received matching signal, and the operational server receives tagging information between the smart watch having transmitted the matching signal and the paging button having transmitted the paging request, thus completes the paging request.

2. The system of claim 1, wherein the at least one paging button transmits a BLE signal to the AP when paging request information is input to the paging button, and transmits a BLE signal to the AP based on a preset transmission period regardless of the paging request information that is input to the paging button.

3. The system of claim 2, wherein the BLE signal transmitted when the paging button receives a paging request signal and the BLE signal transmitted regardless of the reception of the paging request information are different from each other, and the BLE signal transmitted when the paging request signal is received further includes information indicating a paging request.

4. The system of claim 1, wherein when the operational server receives a plurality of matching signals from the at least one smart watch, the operational server matches the paging button with one smart watch.

5. The system of claim 4, wherein the operational server matches the paging button with a smart watch corresponding to a matching signal received first among matching signals received for a predetermined time after the at least one smart watch has transmitted the paging signal.

6. The system of claim 1, wherein the tagging information is information generated after the smart watch is physically in contact with the paging button.

7. The system of claim 1, wherein the tagging information is information generated when the smart watch approaches the paging button within a preset distance range.

8. The system of claim 1, further comprising: a spatial management WEB server managing tagging information between the smart watch and the paging button.

9. A paging system, the system comprising:
at least one paging button positioned at a specific space by being matched thereon;
an access point (AP) receiving a Bluetooth low energy (BLE) signal transmitted from the at least one paging button;
an operational server receiving a paging signal from the AP, and identifying a paging button that has transmitted a paging request based on the paging signal transmitted from the at least one paging button;
at least one smart watch displaying paging information based on the paging signal transmitted from the operational server; and
at least one smartphone receiving web order information from the operational server when the paging button transmits a BLE signal including information indicating a paging request, wherein
when the smart watch receives an acceptance input signal for the paging signal transmitted from the operational server, the smart watch transmits a matching signal to the operational server, the operational server is set to transmit a matching confirmation signal to the at least one smart watch in response to the received matching signal, and the operational server receives tagging information between the smart watch having transmitted the matching signal and the paging button having transmitted the paging request, thus completes the paging request.
